# EUROPEAN PATENT APPLICATION

(11) **EP 4 814 873 A1**
(43) Date of publication of application: **30.09.2026**
(21) Application number: 25198082.7
(22) Date of filing: 26.08.2025
(51) Int. Cl.: G06T 11/00

(54) **EXTENDING THE FIELD OF VIEW OF COMPUTED TOMOGRAPHY RAW DATA**

(71) Applicant: Siemens Healthineers AG, 91301 Forchheim (DE)
(72) Inventor: Baer-Beck, Matthias, 91080 Spardorf (DE); Hofmann, Christian, 91058 Erlangen (DE)
(74) Representative: Siemens Healthineers Patent Attorneys

(57) **Abstract**

The invention relates to a computer-implemented method for extending the field of view of computed tomography raw data that have been acquired by using a ring-like detector (6), the computed tomography raw data comprising illuminated data pixels from detector elements that have been illuminated by primary x-ray radiation during acquisition and non-illuminated data pixels from detector elements that have not been illuminated by the primary x-ray radiation during acquisition, such that there are at least some partially illuminated pixel columns corresponding to the axial direction (A) that comprise respective illuminated data pixels and respective non-illuminated data pixels, the method comprising: applying an estimation model (100) on the computed tomography raw data for estimating data values for the non-illuminated data pixels in at least some of the partially illuminated pixel columns based on the illuminated data pixels, in particular the illuminated data pixels in the respective partially illuminated pixel columns, in order to provide extended computed tomography raw data.

## Description

The invention relates to a computer-implemented method for extending the field of view of computed tomography raw data, a computer-implemented method for reconstructing computed tomography raw data, a computer-implemented method for generating computed tomography image data, a computer-implemented method for providing a trained machine learning model, a corresponding computer program or computer-readable storage medium, a data processing system, and a computed tomography system.

The accuracy of radiation therapy (RT) planning directly depends on the correct assignment of computed tomography (CT) values to electron density values in reconstructed CT images. Furthermore, the calculation of accurate and precise dose distributions for RT planning is only possible if the reconstructed CT image resembles the real patient geometry properly. A very common variant of CT scanners is the 3rd generation CT scanner. 3rd generation CT scanners typically comprise an x-ray source and a segment of detector elements at an opposite site of an examination area that are rotated together around the examination area to provide multiple projections as raw data. For the purpose of image acquisition the x-ray source typically emits a fan of rays that illuminates an area of the object to be examined. The area that is examined with each projection is typically defined to be the field of view and a scan field of view (SFOV) typically corresponds to the area that is directly illuminated by the primary x-ray radiation, e.g. corresponding to a (fan) beam. Current 3rd generation CT scanners that are used to acquire planning images for radiation therapy typically have a scan field of view of 500 mm to 600 mm. Only within the SFOV of the CT scanner the reconstruction of correct CT values is possible and also the exact reproduction of the real patient geometry can only be assured within the scan field of view. This does not hold true for regions outside the SFOV. Due to special requirements regarding patient positioning, special RT-related positioning devices such as breast boards or head holders, or due to the patient habitus (e.g., obese patients) it is a typical RT scanning condition that relevant parts of the patient body are located outside the SFOV of the CT scanner.

For example to address this problem, current 3rd generation clinical CT scanners typically apply extended field of view (EFOV) reconstruction algorithms. Corresponding algorithms are, for example, described in J. Hiseh et al.: A novel reconstruction algorithm to extend the CT scan field-of-view, Med.Phys 31(9), 2385 - 2391, 2004 or in J. Ohnesorge et al.: Efficient correction for CT image artifacts caused by objects extending outside the scan field of view, Med.Phys 27(1), 39 - 46, 2000 or in G. Fonsecca et al.: Evaluation of novel Al-based extended field-of-view CT reconstructions, Med.Phys 48(7), 3583 - 3594, 2021.The common goal of extended field of view reconstruction algorithms is to enable at least an approximate reconstruction of the regions outside the scan field of view of the scanner.

EP 3 629 294 A1 describes a method for providing a training dataset for training a neural network for processing CT-data acquired by a CT scanner in order to provide an improved processing of CT data in the area of an extended field of view.

Bhupinder Singh Khural et al 2022 Biomed. Phys. Eng. Express 8 025021 and Fonseca, G.P., Baer-Beck, M., Fournie, E., Hofmann, C., Rinaldi, I., Ollers, M.C., van Elmpt, W.J.C. and Verhaegen, F. (2021), Evaluation of novel Al-based extended field-of-view CT reconstructions. Med. Phys., 48: 3583-3594 describe methods of extending a field of view based on the application of neural networks.

Currently, CT scanners with stationary, i.e. locally fixed, detector elements are a promising prospect to provide an alternative to 3rd generation CT scanners having specific advantages. The detector elements are typically arranged in detector rings that do not rotate. Corresponding CT scanners are often denoted as 4th generation CT scanners. In some cases, also the rotating x-ray source is replaced with a stationary source ring. Recent developments have found possibilities to overcome some disadvantages associated with such stationary CT scanners such as the problem of handling scattered radiation.

For example, EP 4 449 994 A1 describes a computed tomography system with a static gantry having a detector ring and an x-ray source ring. The detector ring and the x-ray source ring are offset with respect to each other.

A computed tomography system with a static gantry having a detector ring and an x-ray source ring is also described in DE 10 2023 210 619 B3.

The existing methods for providing an extended field of view are mainly directed at third generation CT scanners. Accordingly, it would be desirable to provide a method for providing an extended field of view for reconstruction that is particularly useful for CT scanners with a stationary detector ring.

It is therefore an object of the invention to provide a means for extending the field of view of computed tomography raw data that have been acquired with locally fixed, i.e. stationary, detector elements, in particular with stationary detector rings.

This object is met or exceeded by a method according to claim 1, a method according to claim 8, a method according to claim 9, a method according to claim 10, a computer program or computer-readable storage medium according to claim 13, a data processing system, and a computed tomography system. Further advantages and features result from the dependent claims, the description and the attached figures. Independent of the grammatical term usage, individuals with male, female or other gender identities are included within the term.

According to a first aspect of the invention, a computer-implemented method for extending the field of view of computed tomography (CT) raw data that have been acquired by using a ring-like detector comprising an array of detector elements that are arranged in a circumferential direction around a central axis, the central axis corresponding to an axial direction, is provided. The computed tomography raw data comprise illuminated data pixels from detector elements that have been illuminated by primary x-ray radiation during acquisition and non-illuminated data pixels from detector elements that have not been illuminated by the primary x-ray radiation during acquisition, such that there are at least some partially illuminated pixel columns corresponding to the axial direction that comprise illuminated data pixels and non-illuminated data pixels. The method comprises applying an estimation model on the computed tomography raw data for estimating data values for non-illuminated data pixels in at least some of the partially illuminated pixel columns based on illuminated data pixels including illuminated data pixels in the respective partially illuminated pixel columns in order to provide extended computed tomography raw data.

The method according to the invention takes advantage of the particular geometric properties of a CT scanner setup with a ring-like detector, thus being tailored to the properties of raw data acquired by such CT system. Due to the different geometrical setup the limitation of the scan field of view is different for a CT system with a ring-like detector, i.e., referred to as 4th generation CT scanners, compared to the case of a rotating detector with smaller angular extent, i.e., referred to as 3^{rd} generation CT scanners. In particular, the inventors have noted, that the limitation of the scan field of view that is determined by the width of the detector in fan angle direction (i.e. the circumferential direction) in a 3rd generation CT is lifted for a 4th generation CT scanner. The extension of the detector in fan angle direction no longer limits the field of view that can be reconstructed due to the ring-like detector's extent in the circumferential direction. On the other hand, in a 4th generation CT scanner, the active width of the x-ray beam is limited by the active radiation angle of the x-ray source and/or by the x-ray collimation of the x-ray source. In particular, the illumination width of the CT detector is not equal for all detector columns. Typically, the illumination width decreases with increasing distance from the x-ray sources in the axial direction. Accordingly, in some columns, there are some illuminated detector elements. By taking advantage of this realization, i.e. by using the information measured in the partially illuminated pixel columns, an improved estimation of the other detector elements of the respective columns can be achieved. In particular, columns that are further away from the full columns may thus be estimated with sufficient accuracy, while, for example, a simple linear interpolation of individual lines would in many cases at least lead to strong and potentially not acceptable image artefacts in reconstructed images.

Computed tomography raw data generally describes data acquired by a computed tomography system before reconstruction. The computed tomography raw data are in particular acquired from an object or subject. A subject may, for example, be a human being such as a patient. An object may be part of a human being, such as a limb, a torso, an organ etc. Alternatively, an object may be any other object, e.g. a phantom. Computed tomography raw data may in particular also be described as projection data. Hence, the computed tomography raw data in particular comprise multiple projections of an object that has been scanned during acquisition of the raw data by a computed tomography system. A visual representation of the computed tomography raw data may be denoted as sinogram. Computed tomography raw data are typically acquired by using at least one x-ray source and at least one x-ray detector. In this case, the raw data has been acquired by using a ring-like detector comprising an array of detector elements that are arranged in a circumferential direction around a central axis, the central axis corresponding to an axial direction.

The ring-like detector is in particular a ring-like x-ray detector and the detector elements are in particular x-ray detector elements. Generally, an x-ray detector is a detector, that is configured to detect x-rays. In particular, the x-ray detector may be configured to detect an x-ray intensity and/or x-ray dose. For example, the detector elements of the x-ray detector may comprise an x-ray-sensitive material, that is designed to detect x-rays. For example, the X-ray detector may comprise a scintillation material and/or a scintillation counter for detecting the X-rays. The ring-like detector may in particular be a static ring-like detector. In particular, the static ring-like detector may be configured not to rotate around an examination area in which an object to be examined is arranged. Generally, the term "ring-like" is to be interpreted broadly. The ring-like detector may be a full ring or a partial ring, in particular such that the partial ring extends in the circumferential direction for at least 180°, preferably at least 270°. A full ring-like detector may be denoted as a 360° ring detector. While a full ring may be preferred, the ring may optionally not be fully closed, e.g. for technical reasons. The detector elements are in particular arranged in the circumferential direction according to the ring-like shape of the ring-like detector. In other words, the detector elements are distributed around the ring-like detector. Optionally, the detector elements may be distributed in the circumferential direction in an essentially equidistant manner.

The circumferential direction may also be denoted as angular direction. In particular, the circumferential direction corresponds to the circumference of the ring. The circumferential direction may also be denoted as φ-direction. The axial direction is essentially perpendicular to the circumferential direction and corresponds to the direction of a middle axis of the ring. The axial direction may also be denoted as z-direction. In this context, the term "essentially" is to be understood as meaning that certain deviations, e.g. due to structural reasons, may also exist. However, the axial directions of the respective components, in particular the detector arrangement and the X-ray source arrangement, should preferably not deviate from each other by more than 10°, preferably no more than 5°. In this context, a radial direction is to be understood as running perpendicular to the axial direction and, in particular, running radially outward from a centre point of the respective circumference. Accordingly, the term radial direction is to be understood as meaning that there are several directions that correspond to a radial direction, namely according to the totality of possible radially extending directions. The radial direction can also be referred to as the x-direction, y-direction, and/or x,y-direction.

Generally, a computed tomography system further comprises at least one x-ray source. Accordingly, the computed tomography raw data is in particular data having been acquired by further using at least one x-ray source. The term x-ray source generally describes a device that is configured for producing x-ray radiation. For example, the x-rays may be cone-shaped and/or fan-shaped. In the context of this invention the x-rays may be produced by at least one rotatable x-ray source or by multiple static x-ray sources. Multiple x-ray sources may be distributed in a ring like-manner, in particular corresponding to the ring-like shape of the detector. Accordingly, a ring-like arrangement of x-ray sources may be provided, in particular a 360° ring-like arrangement. In the case of multiple static x-ray sources, different projection angles may be achieved by activating different x-ray sources that are arranged at different circumferential positions. The multiple static x-ray sources, may, for example, be based on a nanotube field emission technology. The ring-like detector and the ring-like distributed x-ray sources may essentially have the same axial direction. The at least one x-ray source and the ring-like detector may be offset with respect to each other in the axial direction. A static ring-like detector and multiple static x-ray sources may be part of or included in a static gantry.

The primary x-ray radiation generally describes the x-ray radiation emitted from the at least one x-ray source and its non-scattered path. In the context of this invention, the primary x-ray radiation may also be denoted as primary radiation. The primary x-ray radiation can be seen in contrast to scattered radiation. The primary x-ray radiation corresponds to a primary x-ray beam. The primary x-ray beam may also be denoted as primary beam. The shape of the primary x-ray beam may, for example, be defined by a collimator in front of the at least one x-ray source. The primary x-ray radiation comprises the attenuated radiation that has passed through a target object or subject, such as a patient or a phantom, without the scattered radiation. In particular, in the context of this application, the primary x-ray radiation also comprises the exit beam, i.e. the beam of (non-scattered) attenuated x-ray radiation after exiting the target object. Illuminated data pixels are data pixels corresponding to detector elements that have ben illuminated by the primary x-ray radiation. Correspondingly, non-illuminated data pixels are data pixels that correspond to detector elements that have not been illuminated by the primary x-ray radiation. Partially illuminated pixel columns comprise both, illuminated data pixels and non-illuminated data pixels. In the context of this invention, pixel columns are defined to be perpendicular t pixel rows. The columns direction corresponds to the axial direction. The row direction corresponds to the circumferential direction. In other words, the data pixels of a pixel column are arranged one after the other in the axial direction. An illumination width in the circumferential direction may be non-uniform, in particular may decrease, in the axial direction.

Generally, the field of view describes the extent of the area observed via the CT acquisition. It is typically defined by the x-ray beam of the x-ray source. In the context of this invention, the field of view, describes the area of illuminated pixels in the computed tomography raw data that can be used for image reconstruction without introducing significant infolding artefacts. Infolding artefacts typically occur, when areas with missing data (i.e., non-illuminated data pixels that are not illuminated by the primary x-ray radiation) are included in the reconstruction. In the context of this invention, a scan field of view can be defined. The scan field of view describes the area in the computed tomography raw data that is illuminated by the primary x-ray radiation such that it can be used for reconstruction without significant reconstruction. Generally, the definition of the scan field of view may vary, e.g. depending on a specific acquisition method and/or on a specific reconstruction and/or on quality requirements. The scan field of view may typically comprise opposite detector pixels that are opposite the respective origin of the primary radiation, as seen in an angular direction, and the detector pixels in an area around the opposite detector pixels, that are distanced in the angular direction from the opposite detector pixels by a fixed distance. For example, the scan field of view may be defined such that a radius of the scan field of view SFOV_max is SFOV_max = R*sin(beta_max), wherein R is the distance from the iso centre to the outer edge of the primary x-ray beam and beta_max is the angle from the center of the primary x-ray beam to the edge of the primary beam. Typically, the edge of the primary beam is defined by the collimator and/or the beam exit aperture of the x-ray source. In the context of this invention an extended field of view may be defined to comprise the scan field of view and, additionally, at least some additional area. The additional area is typically located next and/or around the scan field of view. In particular the additional area may be arranged such that it extends the scan field of view in the circumferential direction. In the context of this invention, the extended field of view is in particular extended such that the partially illuminated columns for which data values are estimated are included in the extended field of view. In particular the extended field of view may comprise pixel columns that comprise at least some illuminated detector pixels, in particular such that the non-illuminated detector pixels of these columns are estimated by the estimation model.

According to the method, data values for non-illuminated data pixels in at least some of the partially illuminated pixel columns are estimated. In particular, non-illuminated data pixels are estimated such that the field of view is extended via the estimated data pixels and/or that the number of illuminated data pixels is increased, by adding estimated illuminated data pixels. Preferably, data values for non-illuminated data pixels may be estimated in essentially all partially illuminated pixel columns. Data values are in particular x-ray signal values. For example, the data values may be x-ray attenuation values, for example based on the Hounsfield scale. The estimation is based on illuminated data pixels including illuminated data pixels in the respective partially illuminated pixel columns. In particular, the illuminated data pixels in the respective partially illuminated pixel columns are illuminated data pixels from the same row as the ones that are estimated. In particular, the estimation may be based on illuminated data pixels including illuminated data pixels form outside the scan field of view. In this context, extended computed tomography raw data is CT raw data that comprises additional data values in at least some originally non-illuminated data pixels based on the estimation. In particular, the extended computed tomography raw data comprises an extended field of view.

According to an embodiment, the computed tomography raw data is data having been acquired by further using at least one x-ray source, the at least one x-ray source being offset from the array of detectors elements in the axial direction. In particular, the at least one x-ray source may be offset from the array of detector elements in the axial direction in such a way that a beam exit opening of the at least one x-ray source is at least partially not covered by the array of detector elements when viewed in the radial direction towards an examination area. In particular, it may be provided that a centre of the beam exit opening is not covered by the array of detector elements. The beam exit aperture may generally refer to the location at which y-rays are emitted outwards from at least one the x-ray source. A setup with such an offset may provide CT raw data that is particularly well-suited to be processed by the method according to the invention.

According to an embodiment, the estimation model comprises a trained machine learning model that is trained to estimate values for non-illuminated data pixels in partially illuminated pixel columns based on illuminated data pixels including illuminated data pixels in the respective partially illuminated pixel columns. A trained machine learning model can provide a particularly good final performance such as in terms of accuracy and image quality. In particular, the computed tomography raw data may be used as input data for the trained machine learning model. For example, a single computed tomography projection or multiple computed tomography projections may be used as input. The trained machine learning model is in particular trained to process computed tomography raw data, i.e. computed tomography image data that is in projection space. Another term for "trained machine learning model" is "trained function". In general, parameters of a machine learning model can be adapted by means of training. In particular, supervised training, semi-supervised training, unsupervised training, reinforcement learning and/or active learning can be used. Furthermore, representation learning (an alternative term is "feature learning") can be used. In particular, the parameters of the machine learning models can be adapted iteratively by several steps of training. In particular, within the training, a certain cost function can be minimized. In particular, within the training of a neural network, a backpropagation algorithm can be used. In particular, a machine learning model can comprise a neural network, a support vector machine, a decision tree and/or a Bayesian network, and/or the machine learning model can be based on k-means clustering, Q-learning, genetic algorithms and/or association rules. In particular, a neural network can be a deep neural network, a convolutional neural network or a convolutional deep neural network. Furthermore, a neural network can be an adversarial network, a deep adversarial network and/or a generative adversarial network.

According to an embodiment the trained machine learning model may comprise a trained neural network. The trained machine learning model used according to this invention may in particular comprise a convolutional neural network. A convolutional neural network is a neural network that uses a convolution operation instead of a general matrix multi-plication in at least one of its layers (so-called "convolutional layer"). In particular, a convolutional layer performs a dot product of one or more convolution kernels with the convolutional layer's input image data, wherein the entries of the one or more convolution kernel are the parameters or weights that are adapted by training. In particular, the Frobenius inner product and the ReLU activation function may be used. A convolutional neural network can comprise additional layers, e.g., pooling layers, fully connected layers, and normalization layers. By using convolutional neural networks input images can be processed in a very efficient way, because a convolution operation based on different kernels can extract various image features, so that by adapting the weights of the convolution kernel the relevant image features can be found during training. Furthermore, based on the weight-sharing in the convolutional kernels less parameters need to be trained, which prevents overfitting in the training phase and allows to have faster training or more layers in the network, improving the performance of the network.

According to an embodiment, the machine learning model may in particular comprise a U-net structure. Within the U-net structure, first the input image data is down-sampled (decreasing the size of the image data and increasing the number of channels), which may also be denoted as contracting path, afterwards they are up-sampled (increasing the size of the images and decreasing the number of channels), which may also be denoted as expanding path, to generate a transformed image. The basic concepts of a U-net architecture and its implementation are described in Ronneberger, O., Fischer, P., Brox, T. (2015). U-Net: Convolutional Networks for Biomedical Image Segmentation. In: Navab, N., Hornegger, J., Wells, W., Frangi, A. (eds) Medical Image Computing and Computer-Assisted Intervention - MICCAI 2015. MICCAI 2015. Lecture Notes in Computer Science, vol 9351. Springer, Cham. For example, the U-net structure may comprise a contracting path with four layers including 3D convolutions followed by a down-sampling of the volume using pooling layers. After the contracting path a layer without a pooling operation may be applied and then an expanding path with four 3D convolution transpose may be applied. For example, a U-net structure may be used as described in Bhupinder Singh Khural et al 2022 Biomed. Phys. Eng. Express 8 025021 or as described in Fonseca, G.P., Baer-Beck, M., Fournie, E., Hofmann, C., Rinaldi, I., Ollers, M.C., van Elmpt, W.J.C. and Verhaegen, F. (2021), Evaluation of novel Al-based extended field-of-view CT reconstructions. Med. Phys., 48: 3583-3594. However, different from these sources, wherein the trained neural network is applied on the image in image space, according to this invention, the machine learning model is applied on the computed tomography raw data which has been found to be particularly useful for CT raw data from a static detector array.

According to an embodiment the estimation model is based on an extrapolation and/or an image inpainting method to extrapolate or inpaint from the illuminated data pixels, including illuminated data pixels in the respective partially illuminated pixel columns, to the non-illuminated data pixels. For example, the extrapolation may be a linear extrapolation, a bilinear extrapolation and/or a spline extrapolation. In particular, a linear extrapolation may comprise the extrapolation in the axial direction, i.e. along the pixel columns, or the extrapolation in the circumferential direction, i.e. along the circumferential direction. For example, for bilinear extrapolation, two variables may be extrapolated, the two variables corresponding to the axial direction and to the circumferential direction. Using an extrapolation and/or an image inpainting may be particularly easy to implement variant.

According to an embodiment, the computed tomography raw data comprise individual computed tomography projections, wherein, during the step of applying an estimation model, individual extended computed tomography projections are estimated as part of the extended computed tomography raw data. Each individual extended computed tomography projection may be based at least on the respective individual computed tomography projection. Optionally, each individual extended computed tomography projection may be based on multiple individual computed tomography projections. The individual computed tomography projection in particular comprises partially illuminated pixel columns with illuminated data pixels and non-illuminated data pixels. It has been found that extending the individual computed tomography projections, namely by estimating the extended computed tomography projections, is particularly efficient and accurate possibility to extend the field of view of computed tomography raw data.

According to an embodiment, the estimation model is applied on a single individual computed tomography projection respectively to estimate each single individual extended computed tomography projection. Applying the estimation model on single individual computed tomography projections for each extended computed tomography projection is a particularly simple approach that is relatively easy to implement and to train.

According to an embodiment, the estimation model is applied on at least two individual computed tomography projections respectively to estimate each single individual extended computed tomography projection. The at least two individual computed tomography projections in particular comprise an individual computed tomography projection that corresponds to the extended computed tomography production. In this context, corresponding may be understood such that the projection is at the same location, in particular at the same axial position and at the same circumferential position. Optionally, more than two individual computed tomography projections may be used as input for the estimation model. It has been found that applying the estimation model on multiple individual computed tomography projections can lead to better estimation results.

According to an embodiment, the at least two individual computed tomography projections comprise the one projection corresponding to the respective estimated single individual extended computed tomography projection and at least one projection that is spaced apart in a predetermined distance in the axial and/or circumferential distance.

According to an embodiment, the at least two individual computed tomography projections comprise the one projection corresponding to the respective estimated single individual extended computed tomography projection and at least one projection spatially adjacent to it. In this context the term "spatially adjacent" may be understood such that the projection is based on x-ray source position that is shifted to next position axially and/or circumferentially. The "next position" may be understood such that the smallest possible step within the tomography raw data in the corresponding direction is applied. In particular, the at least two individual computed tomography projections may comprise two projections spatially adjacent to the one projection corresponding to the respective estimated single individual extended computed tomography projection.

According to an embodiment, after the step of applying as an estimation model, an additional extrapolation model is applied, that is configured to further extend the extended field of view. The extrapolation model may be configured to apply an extrapolation belong the detector role direction, i.e. the circumferential direction. The additional extrapolation model may correspond to known extrapolation models, e.g. extrapolation models for third-generation CT raw data such as mentioned in the introduction of this application. This may allow an even greater extension of the field of view.

According to a further aspect of the invention, a computer-implemented method for reconstructing computed tomography raw data that have been acquired by using a ring-like detector comprising an array of detector elements that are arranged in a circumferential direction around a central axis, the central axis corresponding to an axial direction, the computed tomography raw data comprising illuminated data pixels from detector elements that have been illuminated by a primary x-ray radiation during acquisition and non-illuminated data pixels from detector elements that have not been illuminated by the primary x-ray radiation during acquisition, such that there are at least some partially illuminated pixel columns corresponding to the axial direction that comprise illuminated data pixels and non-illuminated data pixels, is provided. The method comprises applying the method for extending the field of view of computed tomography raw data as described herein further comprises applying a reconstruction algorithm on the extended computed tomography raw data to provide reconstructed computed tomography image data. There reconstruction algorithm may be any suitable reconstruction algorithm as known in the state-of-the-art. All features and advantages of the method for extending the field of view of computed tomography raw data may be adapted to the method for reconstructing computed tomography raw data and vice versa. In particular, the reconstruction may be based on an extended field of view that is extended to an extend corresponding to the pixel columns with estimated data values. In other words, the reconstruction may use the extended computed tomography raw data is provided by the method for extending the field of view of computed tomography raw data.

According to a further aspect of the invention, a computer-implemented method for generating computed tomography image data is provided. The method comprises the following steps:
- performing a computed tomography raw data acquisition with a computed tomography system on a target object or subject to acquire computed tomography raw data, the computed tomography system comprising at least one x-ray source and an array of detector elements that are arranged in a circumferential direction around a central axis, the central axis corresponding to an axial direction;
- applying the method for reconstructing computed tomography raw data as described herein. All features and advantages of the method for extending the field of view of computed tomography raw data and for the method for reconstructing computed tomography raw data may be adapted to the method for generating computed tomography image data and vice versa. In particular, the computed tomography raw data may be acquired by using a ring-like detector comprising an array of detector elements that are arranged in a circumferential direction around a central axis, the central axis corresponding to an axial direction. The computed tomography system may comprise at least one x-ray source. The computed tomography system may comprise at least one rotatable x-ray source and/or multiple stationary x-ray sources. The at least one x-ray source may in particular be offset from the array of detectors elements in the axial direction.

According to a further aspect of the invention, a computer-implemented method for providing a trained machine learning model, in particular comprising a neural network, for application in a method as described herein is provided. The method comprises the following steps:
- providing a training dataset comprising two stacks of computed tomography projection data, a first stack of projection data comprising ground truth data comprising an extended field of view wherein essentially all data pixels in the extended field of view are illuminated data pixels having data values,
   and a second stack of projection data comprising input training data, corresponding to the first stack but different such that some data values for data pixels in the extended field of view are missing;
- training a machine learning model based on the training dataset of ground truth data and input training data;
- providing the trained machine learning model.

During training, the machine learning model is in particular adapted such that the outputs of the model match the ground truth data. The input training data of the second stack corresponding to first stack may in particular comprise that the respective input training data and ground truth data are connected to allow a supervised learning. All features and advantages of the method for extending the field of view of computed tomography raw data, for the method for reconstructing computed tomography raw data, and for the method for generating computed tomography image data may be adapted to the method for providing a trained machine learning model and vice versa. Training the machine learning model in particular comprises optimizing network weights of the machine learning model. The network weights are in particular optimized so that the outputs of the machine learning model match as good as possible the ground truth images.

According to an embodiment, the method for providing a trained machine learning model further comprises the steps of:
- performing a computer simulation for a target computed tomography scanner geometry to generate simulated projections of at least one object for the target computed tomography scanner geometry, the simulated projections corresponding to input training data;
- performing a computer simulation for an altered computed tomography scanner geometry having an increased field of view to generate simulated projections of the at least one object corresponding to ground truth data with an extended field of view and otherwise corresponding to the input training data;
- providing the input training data and the ground truth data as the training dataset for training.

It has been found that using simulated training data can lead to good training results. Using simulated training data has the advantage that no real measurement data need to be provided. Such a simulation-based approach can make it significantly easier to provide the training data. In particular, no test CT scanners are needed to provide the training data. In particular, in a computer simulation the geometry of the of the scanner may be altered so that projection data for all regions inside an extended field of view (EFOV) region may be simulated. Furthermore, a second simulation can be performed using exactly the geometry of the target scanner with missing parts in the EFOV region corresponding to the non-illuminated data pixels. Accordingly, two stacks of projections images may be generated: One stack with ground truth images, i.e., the ground truth data, where all relevant parts of the detector are illuminated (corresponding to the EFOV) and a second stack of projection images where parts in the EFOV region are missing (corresponding to the non-illuminated, i.e. missing, data pixels and the illuminated data pixels). To achieve a good generalization of the network weights the training data (input data and ground truth data) is preferably simulated for a huge variety of scan parameter settings and object geometries. Nevertheless, since the training can be done based on computer simulations and without the need for manual annotation of images, generating a large and diverse training set is advantageously not a limitation of the approach according to this embodiment.

According to an embodiment, the method for extending the field of view or the method for reconstructing computed tomography raw data or the method for generating computed tomography image data as described herein is applied by using, for the as estimation model, the trained machine learning model as trained via the method for providing a trained machine learning model.

According to a further aspect of the invention, a computer program or computer-readable storage medium, in particular non-transient storage medium, comprising instructions which, when the program is executed by a computer, cause the computer to carry out the method as described herein is provided. All features and advantages of any of the methods may be adapted to the computer program or computer-readable storage medium and vice versa. The storage medium may be any computer-readable storage medium. For example, the storage medium may be an optical storage medium or a solid-state storage medium. The storage medium may, be a hard-drive, a solid-state-disk a flash storage an online server etc.

According to a further aspect of the invention, a data processing system is provided. The data processing system comprises an interface configured for receiving input data and a processing unit, configured for applying any or multiple of the methods as described herein. All features and advantages of any of the methods and of the computer program or computer-readable storage medium may be adapted to the data processing system and vice versa. The data processing system may in particular comprise the computer program or computer-readable storage medium as described herein.

According to a further aspect of the invention, a computed tomography system comprising a processing unit that is configured to carry out any of the methods as described herein is provided. All features and advantages of any of the methods, of the computer program or computer-readable storage medium, and of the data processing system may be adapted to the computed tomography system and vice versa.

The embodiments described herein may be combined with each other unless indicated otherwise.

The accompanying drawings illustrate various exemplary embodiments and methods of various aspects of the invention.
Fig. 1 shows an exploded view of a gantry of a static computed tomography system with a ring-like detector comprising an array of detector elements according to an embodiment of the invention;
Fig. 2 shows a static gantry in a front view as viewed in the axial direction
Fig. 3 shows a schematic sectional view from the side of the static gantry of figure 2;
Fig. 4 shows a sketch that may be used for defining a scan field of view of a computed tomography scanner having a ring-like detector according to an embodiment of the invention;
Fig. 5 shows a representation of the computed tomography raw data in projection space;
Fig. 6 shows a diagram of a computer-implemented method for extending the field of view of computed tomography raw data that have been acquired by using a ring-like detector comprising an array of detector elements that are arranged in a circumferential direction around a central axis according to an embodiment of the invention;
Fig. 7 shows a diagram of a computer-implemented method for extending the field of view of computed tomography raw data that have been acquired by using a ring-like detector comprising an array of detector elements that are arranged in a circumferential direction around a central axis according to another embodiment of the invention;
Fig. 8 shows a flow diagram of a computer-implemented method for reconstructing computed tomography raw data that have been acquired by using a ring-like detector comprising an array of detector elements that are arranged in a circumferential direction around a central axis according to an embodiment of the invention;
Fig. 9 shows a flow diagram of a computer-implemented method for generating computed tomography image data according to an embodiment of the invention;
Fig. 10 shows a flow diagram of a computer-implemented method according to an embodiment of the invention for providing a trained machine learning model for application in a method according to the invention such as described with respect to any of the figures 6 to 9; and
Fig. 11 shows a sketch of a computed tomography system according to an embodiment of the invention.

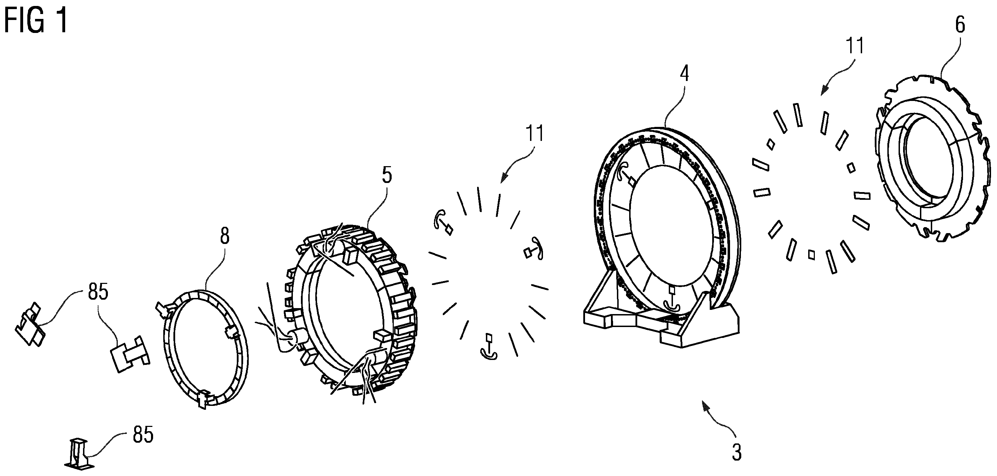

Figure 1 shows an exploded view of a gantry 3 of a static computed tomography system with a ring-like detector 6 comprising an array of detector elements according to an embodiment of the invention. In this embodiment, a basic frame 4 is a central component of the gantry 3. From one side of the gantry 3, the ring-like detector 6 is attached to the basic frame. From the other side of the gantry 3 an x-ray source arrangement 5 with multiple x-ray sources is attached to the basic frame 4. In this embodiment, the x-ray source arrangement 5 comprises a tube ring made of three segments of x-ray sources and the and the ring-like detector 6 is a 360° detector ring made of three segments of detector elements. However, another arrangement of the x-ray sources and the detector elements, in particular another number of segments, would also be possible. Optionally, an axial position of the ring-like detector 6 and of the x-ray source arrangement 5 can be adjusted by spacers 11. Furthermore, a collimator 8 is provided here, which is fastened from the side of the x-ray source arrangement 5 to the basic structure 4 by means of holders 85.

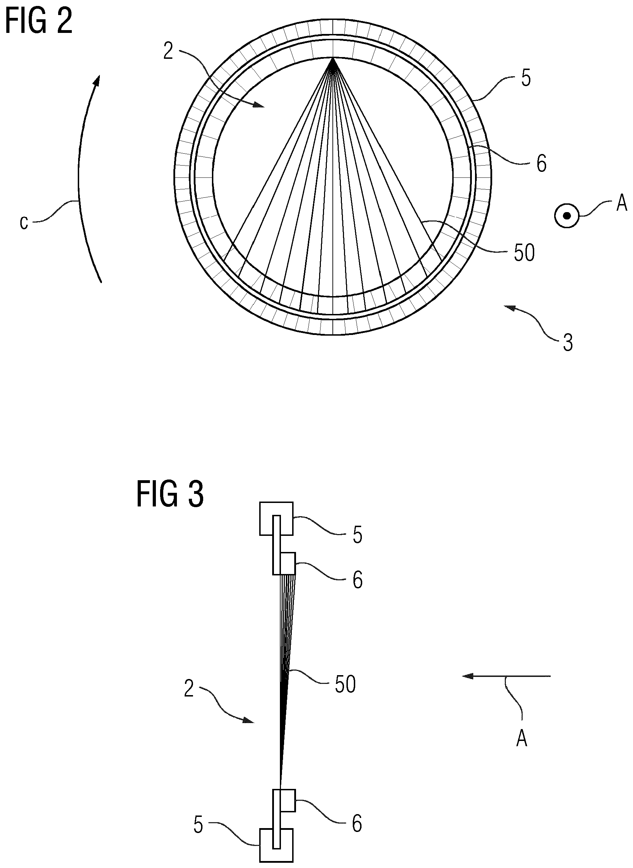

Figure 2 shows a static gantry 3 in a front view as viewed in the axial direction A and figure 3 shows a schematic sectional view from the side of the static gantry 3 according to the same embodiment. The axial direction A corresponds to a z-direction of the computed tomography system. The gantry 3 is arranged as a short ring tunnel around an examination area 2. The gantry 3 comprises a ring-like detector 6 comprising an array of detector elements that are arranged in a circumferential direction C around the central axis A and a ring-like x-ray source arrangement 5, which each enclose the examination area 2. The ring-like detector 6 and the x-ray source arrangement 5 have a common axial direction A. The x-ray source arrangement 5 has a larger diameter than the ring-like detector 6, so that the X-ray source arrangement 5 is arranged further outwards around the examination region 2 than the ring-like detector 6, as seen in a radial direction (which is perpendicular to the axial direction A and the circumferential direction C). In addition, the ring-like detector 6 is arranged offset from the x-ray source arrangement 5 in the axial direction A (i.e., they are z-shifted) such that a beam exit opening of the x-ray source arrangement 5, from which the X-ray beam 50 protrudes, is not completely covered by the detector arrangement 6.

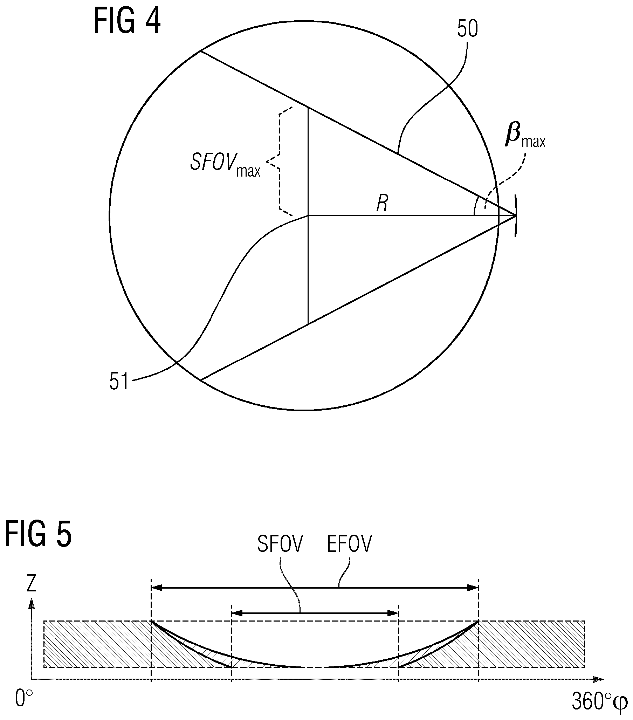

Figure 4 shows a sketch that may be used for defining a scan field of view of a computed tomography scanner having a ring-like detector 6 according to an embodiment of the invention, for example as described with respect to figures 2 and 3. Due to the geometrical setup, the limitation of the scan field of view that is determined by the width of the detector in fan angle direction in a 3rd generation computed tomography scanner is lifted for a computed tomography scanner with a (static) ring-like detector 6 (4th generation CT).The extension of the detector in fan angle direction, i.e. circumferential direction, no longer limits the reconstructable field of view if a ring detector is installed. The size of the scan field of view of such a system is not strictly related to a geometrical property of the scanner setup but may be determined by a trade-off between its size in axial direction A and the decreasing illumination of the detector rows. For example, the radius *SFOV*ₘₐₓ of the scan field of view (SFOV) may be defined as the distance between the isocentre and the edge of the primary x-ray beam 2 such that ${SFOV}_{max} = R \times sin \left({β}_{max}\right)$ wherein R is the distance between the isocentre and x-ray source und *β*ₘₐₓ is the angle defined by the edge of the primary x-ray beam (confined by the beam exit window of the x-ray source and by the collimation) relative to the centre of the beam. Hence, *β*ₘₐₓ, and therefore *SFOV*ₘₐₓ depend on the geometric properties of the system.

Figure 5 shows a representation of the computed tomography raw data in projection space. Figure 5 shows a typical detector illumination in a 4th generation CT having a static ring-like detector, such as described with respect to figure 1 or figures 2 and 3. Due to the geometrical properties of CT scanner the detector is not illuminated homogenously by the primary x-ray beam. In this image, only white regions are illuminated by the primary x-ray beam. In particular, the illumination width of the CT detector is not equal for all detector rows: The illumination width decreases with increasing distance from the x-ray sources in z direction (corresponding to the axial direction A). The φ-direction corresponds to a circumferential direction C of the detector elements. In this case, all regions of the detector that contribute to the scan field of view (SFOV) but are not illuminated by the primary x-ray beam need to be somehow interpolated during the reconstruction process. For the inner regions that are located close to the primary illumination filed of the x-ray beam, i.e. within the scan field of view (SFOV), simple approaches, like linear interpolation between adjacent illuminated projections, may be sufficient. However, in order to extend the scan field of view, i.e. to achieve an extended field of view (EFOV), such that also the detector pixels in the EFOV but outside the SFOV can be used for reconstruction, data values for the non-illuminated (here: black) detector pixels need to be estimated. Simple linear approaches may fail for regions that are further away from the primary illuminated region of the detector or may at least lead to strong and potentially not acceptable image artefacts in reconstructed images. In order to extend the field of view to the EFOV, a method according to the invention may be used.

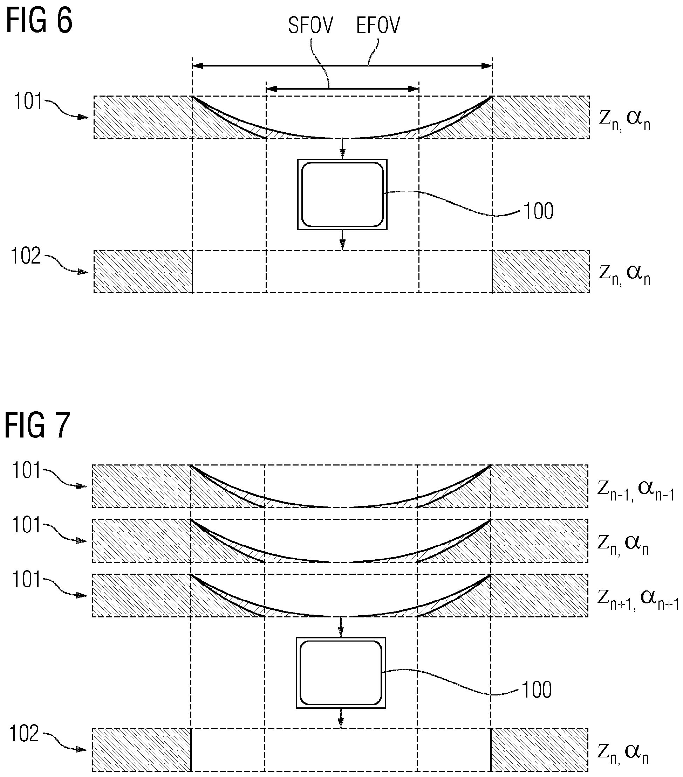

Figure 6 shows a diagram of a computer-implemented method for extending the field of view of computed tomography raw data that have been acquired by using a ring-like detector comprising an array of detector elements that are arranged in a circumferential direction around a central axis according to an embodiment of the invention. The computed tomography raw data comprise illuminated data pixels from detector elements that have been illuminated by primary x-ray radiation during acquisition and non-illuminated data pixels from detector elements that have not been illuminated by the primary x-ray radiation during acquisition, such that there are at least some partially illuminated pixel columns corresponding to the axial direction that comprise illuminated data pixels and non-illuminated data pixels. For example, the computed tomography raw data may correspond to the data shown in figure 5, wherein the pixel columns comprise pixels arranged one after the other in the z-direction. In particular the computed tomography raw data may comprise individual computed tomography projections. In the method, an estimation model 100 is applied on the computed tomography raw data in the form of computed tomography projections 101 for estimating data values for non-illuminated data pixels in at least some of the partially illuminated pixel columns based on illuminated data pixels including illuminated data pixels in the respective partially illuminated pixel columns in order to provide extended computed tomography raw data in the form of extended computed tomography projections 102. The estimation model in particular comprises a trained machine learning model that is trained to estimate values for non-illuminated data pixels in partially illuminated pixel columns based on illuminated data pixels including illuminated data pixels in the respective partially illuminated pixel columns. The extended computed tomography raw data have an extended field of view (EFOV), wherein the data pixels are either directly illuminated from the acquisition or are simulated to be illuminated via the method. Furthermore, according to this embodiment, individual extended computed tomography projections 102 are estimated from individual computed tomography projections 101 corresponding to the same location (i.e. the same z-position *zₙ* corresponding to the axial direction and the same angular position *αₙ* of the detector pixels corresponding to the circumferential direction C), such that the estimation model is applied on a single individual computed tomography projection 101 to estimate each single individual extended computed tomography projection 102. Hence, this is a relatively simple approach, in which the estimation model estimates missing parts in the EFOV region of a single projection 101.

Figure 7 shows a diagram of a computer-implemented method for extending the field of view of computed tomography raw data that have been acquired by using a ring-like detector comprising an array of detector elements that are arranged in a circumferential direction around a central axis according to another embodiment of the invention. This embodiment is performed generally performed analogously to the embodiment described with respect to figure 6. This embodiment differs from the embodiment of figure 6, in that the estimation model 100 is applied on three individual computed tomography projections 101 to estimate each single individual extended computed tomography projection 102. The three individual computed tomography projections 101 comprise the one projection corresponding to the respective estimated single individual extended computed tomography projection, i.e. the projection 101 with the same z position (*zₙ*) and angular position (*αₙ*). The three individual computed tomography projections 101 further comprise two projections 101, that are spatially adjacent (i.e., in this case, *z*_{*n*-1}, *α*_{*n*-1} and *z*_{*n*+1}, *α*_{*n*+1}) to the first projection 101 (*zₙ*, *αₙ*) corresponding to the extended projection 102. Optionally, further projections 101 and/or different projections may be used as input for the estimation model. This is a more sophisticated option that can lead to more precise estimates compared to the variant of figure 6.

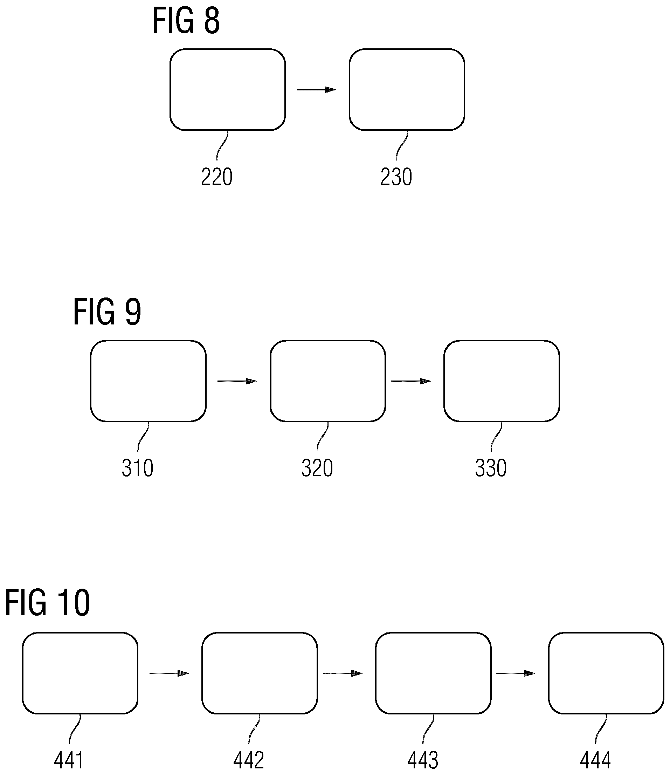

Figure 8 shows a flow diagram of a computer-implemented method for reconstructing computed tomography raw data that have been acquired by using a ring-like detector comprising an array of detector elements that are arranged in a circumferential direction around a central axis according to an embodiment of the invention. The first step 220 may correspond to the method as described with respect to figure 6 or figure 7. Hence, an estimation model is applied on the computed tomography raw data for estimating data values for non-illuminated data pixels in at least some of the partially illuminated pixel columns based on illuminated data pixels including illuminated data pixels in the respective partially illuminated pixel columns in order to provide extended computed tomography raw data. In a further step 230, a reconstruction algorithm is applied on the extended computed tomography raw data to provide reconstructed computed tomography image data. In particular, the reconstruction may be based on an extended field of view that is extended to an extend corresponding to the pixel columns with estimated data values.

Figure 9 shows a flow diagram of a computer-implemented method for generating computed tomography image data according to an embodiment of the invention. In a first step 310, a computed tomography system is applied on a target object or subject, such as a patient or part of a patient, to acquire computed tomography raw data, the computed tomography system comprising at least one x-ray source and an array of detector elements that are arranged in a circumferential direction around a central axis. The following two steps 320 & 330, correspond to the steps 220 and 230 as described with respect to figure 8.

Figure 10 shows a flow diagram of a computer-implemented method according to an embodiment of the invention for providing a trained machine learning model for application in a method according to the invention such as described with respect to any of the figures 6 to 9. In a step 441 of the method, a computer simulation is performed for a target computed tomography scanner geometry to generate simulated projections of at least one object for the target computed tomography scanner geometry, the simulated projections corresponding to input training data. In another step 442 of the method, a computer simulation is performed for an altered computed tomography scanner geometry having an increased field of view to generate simulated projections of the at least one object corresponding to ground truth data with an extended field of view and otherwise corresponding to the input training dat. The ground truth data thus comprise an extended field of view wherein essentially all data pixels in the extended field of view are illuminated data pixels having data values and the ground truth data are provided as a first stack of training data. Accordingly, the input training data are provided as a second stack of training data and they are different from the ground truth data such that some data values for data pixels in the extended field of view are missing. In a further step 443, the machine learning model is trained based on the training dataset of ground truth data and input training data, in particular by optimizing network weights of the machine learning model. In a further step 444, the trained machine learning model is provided.

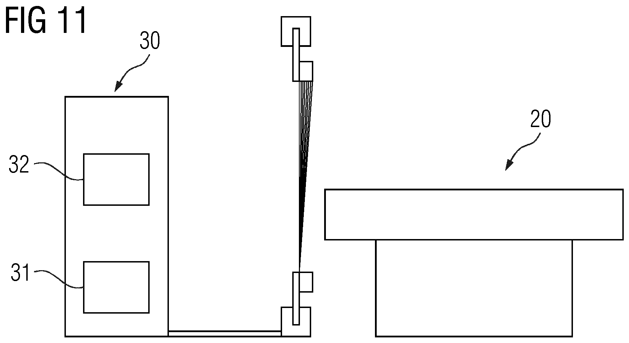

Figure 11 shows a sketch of a computed tomography system according to an embodiment of the invention. The computed tomography system comprises a gantry 3 with a static ring-like detector 6 comprising an array of detector elements and a ring-like x-ray source arrangement 5.

The gantry 3 may in particular correspond to the gantry described with respect to figures 2 and 3. The computed tomography system further comprises a patient table 20 and a data processing system 30. The data processing system 30 comprises an interface 31, configured for receiving input data, and a processing unit 32, configured for performing any one or multiple of the methods according to the invention. For example, the processing unit 32 may be configured to perform the method as described with respect to any one of figures 6 to 10.

## Claims

1. A computer-implemented method for extending the field of view of computed tomography raw data that have been acquired by using a ring-like detector (6) comprising an array of detector elements that are arranged in a circumferential direction (C) around a central axis, the central axis corresponding to an axial direction (A),
the computed tomography raw data comprising illuminated data pixels from detector elements that have been illuminated by primary x-ray radiation during acquisition and non-illuminated data pixels from detector elements that have not been illuminated by the primary x-ray radiation during acquisition, such that there are at least some partially illuminated pixel columns corresponding to the axial direction (A) that comprise respective illuminated data pixels and respective non-illuminated data pixels,
the method comprising:
applying an estimation model (100) on the computed tomography raw data for estimating data values for the non-illuminated data pixels in at least some of the partially illuminated pixel columns based on the illuminated data pixels, in particular the illuminated data pixels in the respective partially illuminated pixel columns, in order to provide extended computed tomography raw data.

2. The method according to claim 1,
wherein the computed tomography raw data is data having been acquired by further using at least one x-ray source, the at least one x-ray source being offset from the array of detectors elements in the axial direction (A).

3. The method according to any one of the preceding claims,
wherein the estimation model (100) comprises a trained machine learning model that is trained to estimate values for non-illuminated data pixels in partially illuminated pixel columns based on illuminated data pixels including illuminated data pixels in the respective partially illuminated pixel columns.

4. The method according to any one of the preceding claims,
wherein the computed tomography raw data comprise individual computed tomography projections (101),
wherein, during the step of applying an estimation model (100), individual extended computed tomography projections (102) are estimated as part of the extended computed tomography raw data.

5. The method according to claim 4,
wherein the estimation model (100) is applied on a single individual computed tomography projection (101) respectively to estimate each single individual extended computed tomography projection (102).

6. The method according to claim 4,
wherein the estimation model (100) is applied on at least two individual computed tomography projections (101) respectively to estimate each single individual extended computed tomography projection (102).

7. The method according to claim 6,
wherein the at least two individual computed tomography projections (101) comprise the one projection (101) corresponding to the respective estimated single individual extended computed tomography projection (102) and at least one projection (101) spatially adjacent to it.

8. A computer-implemented method for reconstructing computed tomography raw data that have been acquired by using a ring-like detector (6) comprising an array of detector elements that are arranged in a circumferential direction (C) around a central axis, the central axis corresponding to an axial direction (A),
the computed tomography raw data comprising illuminated data pixels from detector elements that have been illuminated by primary x-ray radiation during acquisition and non-illuminated data pixels from detector elements that have not been illuminated by the primary x-ray radiation during acquisition, such that there are at least some partially illuminated pixel columns corresponding to the axial direction (A) that comprise illuminated data pixels and non-illuminated data pixels,
the method comprising applying the method according to any one of the preceding claims and further comprising applying a reconstruction algorithm on the extended computed tomography raw data to provide reconstructed computed tomography image data.

9. A computer-implemented method for generating computed tomography image data, comprising the following steps:
- performing a computed tomography raw data acquisition with a computed tomography system on a target object or subject to acquire computed tomography raw data, the computed tomography system comprising at least one x-ray source and an array of detector elements that are arranged in a circumferential direction (C) around a central axis, the central axis corresponding to an axial direction (A);
- applying the method according to claim 8.

10. A computer-implemented method for providing a trained machine learning model for application in a method according to any one of the claims 1 to 9, the method comprising the following steps:
- providing a training dataset comprising two stacks of computed tomography projection data,
a first stack of projection data comprising ground truth data comprising an extended field of view wherein essentially all data pixels in the extended field of view are illuminated data pixels having data values,
and a second stack of projection data comprising input training data, corresponding to the first stack but different such that some data values for data pixels in the extended field of view are missing;
- training a machine learning model based on the training dataset of ground truth data and input training data;
- providing the trained machine learning model.

11. The method according to claim 10, further comprising the steps of:
- performing a computer simulation for a target computed tomography scanner geometry to generate simulated projections of at least one object for the target computed tomography scanner geometry, the simulated projections corresponding to input training data;
- performing a computer simulation for an altered computed tomography scanner geometry having an increased field of view to generate simulated projections of the at least one object corresponding to ground truth data with an extended field of view and otherwise corresponding to the input training data;
- providing the input training data and the ground truth data as the training dataset for training.

12. The method according to any one of claims 1 to 9, using the trained machine learning model as trained in claim 10 or 11 as the estimation model (100).

13. A computer program or computer-readable storage medium, in particular non-transient storage medium, comprising instructions which, when the program is executed by a computer, cause the computer to carry out the method of any one of the preceding claims.

14. A data processing system (30) comprising,
- an interface (31), configured for receiving input data,
- a processing unit (32), configured for applying the method according to any one of claims 1 to 12.

15. A computed tomography system comprising a processing unit that is configured to carry out the method according to any one of claims 1 to 12 and/or comprising the data processing system (30) according to claim 14.
